# EUROPÄISCHE PATENTANMELDUNG

(11) **EP 1 350 611 A1**
(43) Veröffentlichungstag der Anmeldung: **08.10.2003**
(21) Anmeldenummer: 03005586.7
(22) Anmeldetag: 12.03.2003
(51) Int. Cl.: B29C 45/00, A61K 9/20

(54) **Verfahren zum Herstellen von Wirkstoffe enthaltenden Formkörpern**

(30) Priorität: 28.03.2002 DE 10213977
(71) Anmelder: Krauss-Maffei Kunststofftechnik GmbH, 80997 München (DE); Mannesmann Plastics Machinery GmbH, 80997 München (DE)
(72) Erfinder: Bürkle, Erwin, 83671 Benediktbeuern (DE); Wobbe, Hans, 82211 Herrsching (DE)
(74) Vertreter: Zollner, Richard, Dipl.-Phys.

(57) **Zusammenfassung**

Die Erfindung bezieht sich auf die Herstellung von Formkörpern mit Wirkstoffen wie Tabletten im pharmazeutischen oder chemischen Bereich.

Erfindungsgemäß wird vorgeschlagen, das aus der Kunststofftechnik an sich bekannte Spritzgießen einzusetzen, bei dem in einem Extruder (10) das zu formende Material gemischt und gefördert wird und über zwei alternierend betriebene Einspritzeinheiten (20,30) in die Formhohlräume (56) eines Formwerkzeugs (54,55) eingespritzt und dort zu den Formkörpern (60) ausgeformt wird.

## Beschreibung

Die Erfindung bezieht sich auf ein Verfahren zum Herstellen von Formkörpern, die Wirkstoffe enthalten. Derartige Formkörper sind beispielsweise Tabletten im Pharmazie- oder Kosmetikbereich, sog. "Brausetabletten" zur Herstellung von Getränken oder auch Pellets in der Chemie oder Waschmittelindustrie zur Herstellung von Reinigungslösungen.

Zur Herstellung von Tabletten ist es beispielsweise üblich, zunächst eine Platte oder ein Band aus dem Tablettenmaterial zu fertigen und anschließend zylindrische Tabletten auszustanzen. Das dabei übrig bleibende Material, das sog. Stanzgitter, muß anschließend entweder erneut umgeformt werden, was insbesondere bei empfindlichen Wirkstoffen problematisch ist, oder es muß als Abfall entsorgt werden. Bei dem dargestellten Prozeß sind somit zwei Vorgänge nötig, nämlich das Herstellen des Halbzeugs (Band, Platte) und die Ausbildung des Endproduktes.

Demgegenüber wird erfindungsgemäß vorgeschlagen, Formkörper mit Wirkstoffen in einem Spritzgießvorgang herzustellen, wobei vor dem Spritzgießen die Wirkstoffe und ggf. Zuschlagstoffe in einer Schnecken-Zylinder-Einheit vermischt und gefördert werden. Erfindungsgemäß verfolgt der Herstellungsprozeß in einem Ablauf, der dazu ohne Stanzgitter auskommt und damit abfallfrei ist.

Das Spritzgießen ist aus der Kunststoffverarbeitung allgemein bekannt. Dabei wird Kunststoffmaterial mittels einer Schnecke plastifiziert und gefördert und anschließend unter Druck in den Formhohlraum eines Formwerkzeugs eingespritzt. Diese Vorgänge können in getrennten Aggregaten erfolgen, d.h. einem Extruder und einer Einspritzeinheit oder in einem kombinierten Aggregat, bei dem die Schnecke sowohl zum Plastifizieren als auch zum Einspritzen verwendet wird.

Vorzugsweise wird erfindungsgemäß ein Extruder, insbesondere ein 2-Wellen-Extruder verwendet, mit dem auch empfindliche Materialien schonend vermischt und gefördert werden können. Überdies ist es auch möglich, empfindliche Wirkstoffe stromabwärts in den Extruder zuzudosieren. Die Verweildauer der Wirkstoffe unter thermischer und scherintensiver Belastung werden damit erheblich reduziert. In Verbindung mit zwei Einspritzeinheiten kann ein solcher Extruder kontinuierlich arbeiten und ermöglicht dadurch eine rationelle Fertigung mit gleichbleibender Qualität. Ein hoher Durchsatz kann erzielt werden, indem ein Formwerkzeug mit mehreren Formhohlräumen zum gleichzeitigen Spritzgießen einer Anzahl von Formkörpern verwendet wird.

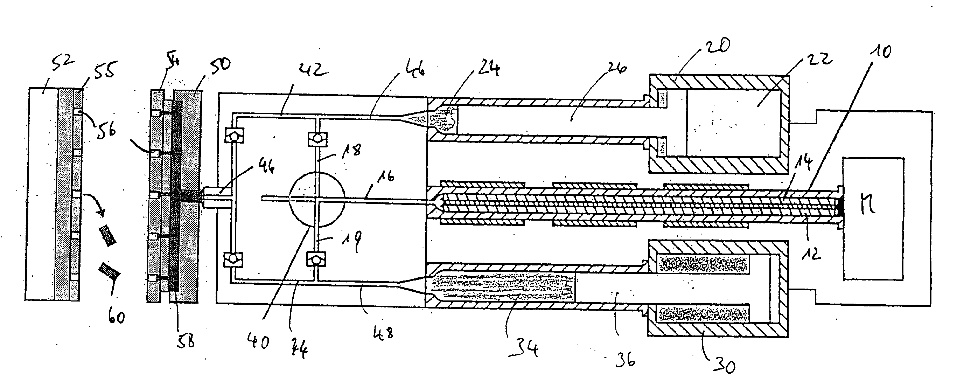

Eine Ausführungsform der Erfindung wird anhand der beigefügten Zeichnung erläutert. Die Zeichnung zeigt in einer schematischen Darstellung eine Spritzgießmaschine zum Herstellen von Formkörpern mit Wirkstoffen.

Die Vorrichtung umfaßt als Schnecken-Zylinder-Einheit einen Doppelwellenextruder mit einem Zylinder 10, in dem zwei Schnecken 12, 14 von einem Motor getrieben, gleichsinning umlaufen. Wirkstoffe sowie ggf. Zuschlagstoffe, Füllstoffe und Binder werden in den Zylinder 10 kontinuierlich eingefüllt und werden durch die Bewegung der Schnecken 12, 14 vermischt und in Richtung auf einen Ausgangskanal 16 transportiert. Der Ausgangskanal 16 mündet in ein Dreiwegeventil, das den Materialstrom entweder über einen Kanal 46 einer ersten Einspritzzylindereinheit 20 oder über den Kanal 48 einer zweiten Einspritzeinheit 30 zuführt. Das Material sammelt sich im Innenraum 24, 34 eines Einspritzzylinders der jeweiligen Einspritzeinheit. Nach Füllung der Einspritzeinheit wird das Material durch Bewegung eines Kolbens 26, 36 über Einspritzkanäle 42, 44 einer Einspritzdüse 46 und damit einem Formwerkzeug zugeführt.

Das Formwerkzeug besteht aus einer ersten Formhälfte 54 und einer zweiten Formhälfte 55, die jeweils Formhohlräume zur Ausbildung der Formkörper aufweisen, wobei die Formhälften auf einer beweglichen Aufspannplatte 52 einer festen Aufspannplatte 50 befestigt sind.

Bei einem Einspritzvorgang sind die Formhälften und damit die Formhohlräume 56 geschlossen, und das Material wird von der Einspritzdüse über einen Verteiler 58, der in der Formaufspannplatte oder der Werkzeugform 56 ausgebildet ist, in die Formhohlräume geleitet. Nach Abschluß des Formungsvorganges werden die Formhälften geöffnet und die fertigen Formteile 60 werden aus der Form entnommen oder ausgestoßen.

Die Einspritzeinheiten 20, 30 werden alternierend betrieben, d.h. gleichzeitig wird eine der Einspritzeinheiten mit Material befüllt, während die andere Einheit einen Einspritzvorgang durchführt. Dadurch kann ein kontinuierlicher Betrieb des Extruders mit hohem Materialdurchsatz sichergestellt werden.

Grundsätzlich ist es auch möglich, statt eines Extruders eine Einspritzschneckeneinheit zu verwenden, bei der die Schnecke sowohl zur Durchmischung und zur Förderung als auch zum Einspritzen des Materials dient.

## Patentansprüche

1. Verfahren zur Herstellung von Formkörpern mit Wirkstoffen, insbesondere für den pharmazeutischen oder chemischen Bereich, wobei man die Wirkstoffe und ggf. Zuschlagstoffe in einer Schnecken-Zylinder-Einheit vermischt und fördert und das resultierende Material in einem Spritzgießvorgang in den geschlossenen Formhohlraum eines Formwerkzeugs einspritzt und ausformt.

2. Verfahren nach Anspruch 1, wobei man das Material in mehrere getrennte Formhohlräume einspritzt.

3. Verfahren nach Anspruch 1 oder 2, **dadurch gekennzeichnet, dass** Wirkstoffe stromabwärts der Schnecken-Zylinder-Einheit zugeführt werden.

4. Spritzgießeinrichtung zur Verwendung in einem Verfahren nach Anspruch 1 oder 2, **dadurch gekennzeichnet, dass** die Schnecken-Zylinder-Einheit eine Zufuhreinrichtung zur Zugabe von Wirkstoffen aufweist.

5. Spritzgießeinrichtung nach Anspruch 3, mit einem kontinuierlich arbeitenden Extruder (10) und zumindest einer intermittierend arbeitenden Einspritzeinheit (20, 30).

6. Spritzgießeinrichtung nach Anspruch 3, mit einem kontinuierlich arbeitenden Extruder (10) und zwei alternierend arbeitenden Einspritzeinheiten (20, 30).

7. Spritzgießeinrichtung nach einem der Ansprüche 4 bis 6, **dadurch gekennzeichnet, dass** als Extruder ein Zweiwellen-Extruder vorgesehen ist.

8. Spritzgießeinrichtung nach Anspruch 4 mit einem Schnecken-Einspritz-Aggregat.

9. Spritzgießeinheit nach einem der Ansprüche 4 bis 8, **gekennzeichnet durch** ein Formwerkzeug mit mehreren separaten Kavitäten.

10. Spritzgießeinrichtung nach einem der vorhergehenden Ansprüche, **dadurch gekennzeichnet, dass** die Zufuhreinrichtung zur Zugabe der Wirkstoffe in einem stromabwärts gelegenen Teil des Extruders vorgesehen ist.
